# EUROPÄISCHE PATENTSCHRIFT

(11) **EP 0 461 404 B1**
(45) Veröffentlichungstag und Bekanntmachung des Hinweises auf die Patenterteilung: **21.02.1996**
(21) Anmeldenummer: 91107680.0
(22) Anmeldetag: 11.05.1991
(51) Int. Cl.: G01N 21/03

(54) **Verfahren zur Herstellung einer Küvette für fotometrische oder spektrometrische Messeinrichtungen**
Method for manufacturing a cuvette for photometrical or spectrometrical measuring devices
Procédé de fabrication d'une cuvette pour des dispositifs photométriques ou spectrométriques de mesure

(30) Priorität: 11.06.1990 DE 4018610
(43) Veröffentlichungstag der Anmeldung: 18.12.1991
(73) Patentinhaber: Hartmann & Braun Aktiengesellschaft, D-60484 Frankfurt am Main (DE)
(72) Erfinder: Bernhardt, Günter, W-6000 Frankfurt (DE); Fabinski, Walter, W-6239 Kriftel (DE)
(74) Vertreter: Meissner, Peter E., Dipl.-Ing.

(56) Entgegenhaltungen:
- EP-A- 0 344 461
- DE-A- 2 720 636
- DE-A- 3 010 516
- DE-A- 3 522 949

## Beschreibung

Die Erfindung betrifft ein Verfahren zur Herstellung einer Küvette für fotometrische oder spektrometrische Meßeinrichtungen.
Für derartige Meßeinrichtungen werden Küvetten benötigt, die in einem Metallkörper definierter Länge ein Gas mit definierter Konzentration fest eingeschlossen enthalten, wobei die jeweiligen Stirnseiten der Küvette mit für Lichtstrahlen durchlässigen Fenstern aus Kalziumfluorid CaF₂ gasdicht abgeschlossen sind. Der gewünschte Meßeffekt resultiert aus der definierten Absorption von Lichtstrahlen durch das eingeschlossene Gas bei hoher Konstanz des Absorptionseffektes.

Es sind verschiedene Techniken zum Aufbau von Küvetten bekannt. In der Gebrauchsanweisung 42/20-22-0 (9.79) für den Gasanalysator Radas 1G der Fa.Hartmann & Braun ist auf Seite 40 eine Kalibrierküvette beschrieben, die aus Quarz und Übergangsgläsern besteht und in die ein Gas durch Abschmelzen des Glases bei der Schmelztemperatur fest eingeschlossen wird. Ein solches Schmelzverfahren ist jedoch nicht geeignet für Kohlenwasserstoffe und NOₓ-Gase, die sich bei der hohen Temperatur, wie sie beim Schmelzen von Quarz oder Gläsern benötigt werden, verändern. Andererseits sind Quarz oder Gläser nicht geeignet für Anwendungen im mittleren Infrarot, da die Infrarotstrahlung bereits bei Wellenlängen von ca.4,5 µm bzw. ca.2,5 µm absorbiert wird. Aus dem selben Grund ist auch Saphir nur eingeschränkt verwendbar. Die Absorptionskante liegt hier bei ca.5,5 µm und kann damit die Absorptionsspektren von SO₂ und vieler Kohlenwasserstoffe nicht oder nur teilweise erfassen.

Aus der DE-OS 30 10 516 ist eine Küvette für optische Gasanalysengeräte bekannt, strahlungsdurchlässige Fenster mittels eines Glaslotes als Hartlot mit einem Zwischenrahmen zu verbinden. Die so vorbereiteten Fenster werden mit einem Weichlot oder einem Hartlot mit dem Küvettengehäuse gasdicht verbunden.

Aus der DE-OS 27 20 636 ist es bekannt, die strahlungsdurchlässigen Fenster als Scheiben aus Kalzium- oder Bariumfluorid herzustellen.

Wegen seiner Transparenz für Infrarotstrahlung im mittleren Infrarot bis zu einer Wellenlänge von ca.8 µm wird Flußspat als Abschlußfenster in Küvetten eingesetzt. Damit können die Absorptionsspektren der meisten technisch wichtigen Gase für meßtechnische Zwecke erfaßt werden. Dieses Material ist darüberhinaus ausreichend unhygroskopisch und besitzt keine katalytischen Eigenschaften für die benötigten Füllgase.

Der Erfindung liegt die Aufgabe zugrunde, ein Verfahren zur Herstellung einer nichtkatalytisch wirkenden gasdichten Küvette unter Einsatz einer im Bereich unter 220°C lötbaren Verbindung zwischen Flußspat und einem Metallträger zu entwickeln.

Die Lösung der Aufgabe gelingt mit den kennzeichnenden Merkmalen des Patentanspruches. Im folgenden wird das erfindungsgemäße Verfahren anhand eines in den Figuren dargestellten Ausführungsbeispieles einer Küvette näher erläutert. Es zeigen
- Figur 1: eine Küvette in Explosionsdarstellung und
- Figur 2: den Schnitt durch ein Detail eines beschichteten Fensters in vergrößertem Maßstab.

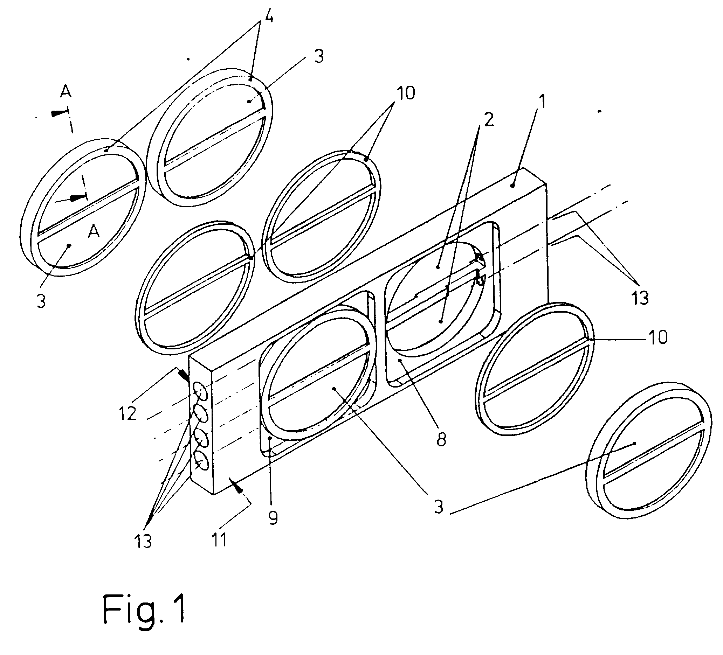

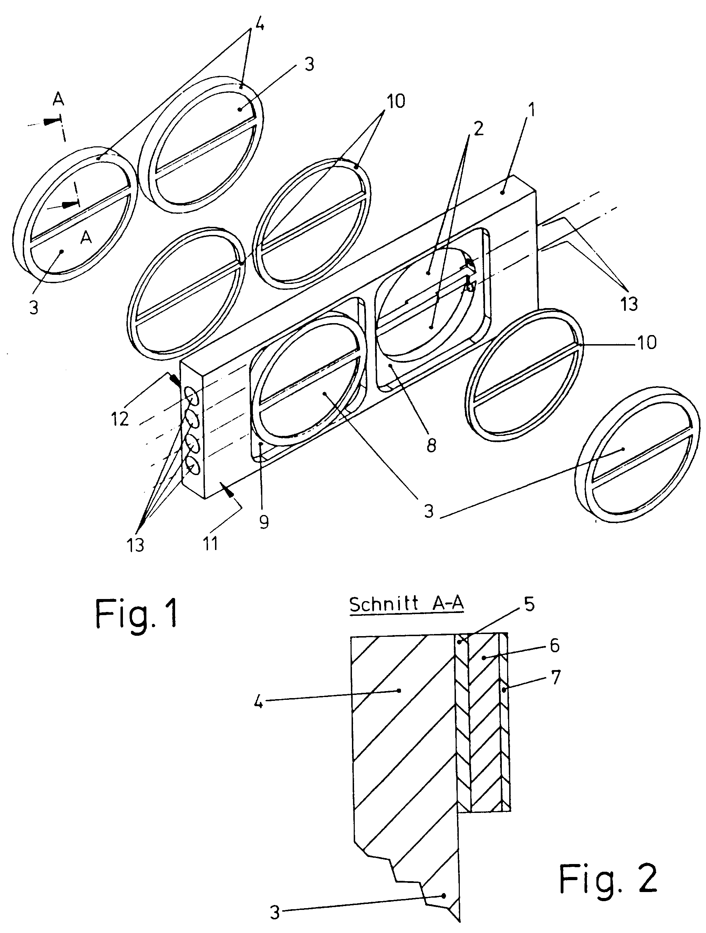

Die in Figur 1 dargestellte Ausführungsform einer Küvette für eine fotometrische Meßeinrichtung besteht aus einem länglich rechteckförmigen Behälter 1 aus Metall, beispielsweise Messing oder eine geeignete Messinglegierung, in dem ein Gas definierter Konzentration eingeschlossen ist, durch das Lichtstrahlen hindurchdringen. Zu diesem Zweck besitzt der Behälter 1 halbkreisförmige Durchbrechungen, im folgenden als Öffnung 2 bezeichnet, die auf beiden Seiten 11 und 12 des Behälters 1 mit für Lichtstrahlen durchlässigen Scheiben 3 aus Kalziumfluorid gasdicht verschlossen sind. Zwischen den Scheiben 3 und den Rändern der Öffnungen 2 befindet sich das Gas, welches über seitlich im Behälter 1 eingelassene Bohrungen 13 eingebracht wird. Mit 10 sind Lotformteile bezeichnet, die beim Löten als Bindemittel zwischen dem Behälter 1 und den Scheiben 3 verwendet werden.

Die Funktion und die Langzeitkonstanz der beschriebenen Küvette hängen entscheidend von der Qualität der Verbindung zwischen den lichtdurchlässigen Scheiben und dem Behälter aus Metall ab. Das im folgenden beschriebene Verfahren zur Vorbereitung und Durchführung des Lötvorganges bietet ein Höchstmaß an Langzeitkonstanz der mit einem Gas gefüllten Küvette.

Durch Versuche hat sich herausgestellt, daß folgende Verfahrensschritte zur Herstellung der beschriebenen Küvette für deren einwandfreie Funktion unerläßlich sind.
- Reinigen der Scheiben (3) aus Kalziumfluorid durch Ultraschallbehandlung mit speziellen Tensiden.
- Metallisierung der Scheiben (3) an den Rändern (4) im Bereich der Lötfläche (8) mit einem physikalischen Aufdampf-Verfahren (physical vapour deposition oder PVD-Verfahren)

in folgender Reihenfolge:
1. Aufbringen einer Chrom-Nickel-Schicht (5) von ca.50 nanometer,
2. Aufbringen einer Nickel-Schicht (6) von ca.200 nanometer und
3. Aufbringen einer Gold-Schicht (7) von ca.30 nanometer.

- Ausbildung der Lötfläche (8) mit einem Lotauffangvolumen im unmittelbaren Bereich von der Lötnut (9).
- Aufbringen einer Aktivitätsschutzschicht aus Gold von ca.30 nanometer Dicke auf dem Metallträger (11) im Bereich der Lötfläche (8).
- Verwendung von Lotformteilen (10) mit definierter und genau dosierter Überschußmenge die im Lotauffangvolumen bleibt.
- Löten in der Dampfphase einer Inertflüssigkeit bei verschiedenen Temperaturen für die eine Seite (11) und die andere Seite (12) der Küvette, wobei die Inertflüssigkeit dem Lot der Lotformteile (10) angepaßt ist.

## Patentansprüche

1. Verfahren zur Herstellung einer Küvette für fotometrische Meßeinrichtungen, mit folgenden Merkmalen:
- einem von Lichtstrahlen durchdrungenen Behälter (1), in dem ein Gas definierter Konzentration eingeschlossen ist;
- der Behälter (1) weist für Lichtstrahlen durchlässige Öffnung (2) auf, die mit Fenstern verschlossen sind;
- die Fenster sind als Scheiben (3) aus Kalziumfluorid CaF₂ ausgebildet, die mit dem Behälter (1) gasdicht verbunden sind
- und zwischen den Scheiben (3) und dem Behälter (1) eine Lötverbindung besteht,
dadurch gekennzeichnet, daß die Lötverbindung nach folgenden Verfahrensschritten hergestellt wird:
- Die Scheiben (3) werden mit Tensiden vorgegebener Zusammensetzung ultraschallgereinigt und im Bereich der mit dem Behälter (1) verbundenen Lötfläche (4) mit einem physikalischen Aufdampf-Verfahren (physical vapour deposition oder PVD-Verfahren) metallisiert durch Auftragen der folgenden Schichten
- eine Chrom-Nickel-Schicht (5) von ca.50 nanometer,
- eine Nickel-Schicht (6) von ca.200 nanometer und
- eine Gold-Schicht (7) von ca.30 nanometer.
- Auf die Lötfläche (8) im Behälter (1), die mit einem Lötauffangvolumen im unmittelbaren Bereich einer Lötnut (9) versehen ist, wird eine Aktivitätsschutzschicht aus Gold von ca.30 nanometer Dicke aufgedampft.
- Zum Löten werden Lotformteile (10) mit Überschußmenge verwendet.
- In der Dampfphase einer Inertflüssigkeit erfolgt bei Temperaturen von ca. 213°C die Lötung der ersten Seite (11) des Behälters (1) und bei Temperaturen von ca. 170°C die Lötung der zweiten Seite (12) des Behälters (1).

## Claims

1. A method of producing a cuvette for photometric measuring apparatuses, with the following features:
- a vessel (1) penetrated by light rays, in which vessel (1) a gas of defined concentration is entrapped;
- the vessel (1) comprises openings (2) permeable to light rays, which openings (2) are closed with windows;
- the windows are constructed as sheets (3) of calcium fluoride CaF₂, which are connected gas-tightly with the vessel (1)
- and between the sheets (3) and the vessel (1) there is a soldered joint,
characterized in that the soldered joint is produced according to the following method steps:
- the sheets (3) are ultrasonically cleaned with surfactants of predetermined composition and are metallised in the area of the soldering surface (4) connected with the vessel (1) with a physical vapour deposition or PVD process by application of the following layers
- a chrome nickel layer (5) of approximately 50 nanometers,
- a nickel layer (6) of approximately 200 nanometers and
- a gold layer (7) of approximately 30 nanometers;
- an activity protective layer of gold approximately 30 nanometers thick is vapour deposited on the soldering surface (8) in the vessel (1), which surface (8) is provided with a solder collecting space in the immediate vicinity of a solder groove (9);
- solder preforms (10) with excess are used for soldering;
- in the vapour phase of an inert fluid soldering of the first side (11) of the vessel (1) occurs at temperatures of approx. 213°C and soldering of the second side (12) of the vessel (1) occurs at temperatures of approx. 170°C.

## Revendications

1. Procédé pour la fabrication d'une cuvette pour des dispositifs de mesure photométriques, ayant les caractéristiques suivantes :
- un récipient (1) traversé par des rayons lumineux dans lequel est enfermé un gaz de concentration définie ;
- le récipient (1) présente des ouvertures (2) transparentes aux rayons lumineux qui sont fermées par des fenêtres ;
- les fenêtres sont réalisées sous forme de disques (3) en fluorure de calcium CaF₂, qui sont reliés de façon étanche au gaz au récipient (1), et
- entre les disques (3) et le récipient (1), il est prévu une jonction par brasage,
caractérisé en ce que la jonction par brasage est réalisée selon les étapes suivantes de procédé :
- les disques (3) sont nettoyés par ultrasons avec des tensio-actifs de composition prédéfinie et, dans la zone de la surface de brasage (4) reliée au récipient (1), métallisés par un procédé de vaporisation physique ("physical vapour deposition" ou procédé PVD), par application des couches suivantes :
- une couche de nickel-chrome (5) d'environ 50 nanomètres,
- une couche de nickel (6) d'environ 200 nanomètres, et
- une couche d'or (7) d'environ 30 nanomètres,
- sur la surface de brasage (8) dans le récipient (1), qui est munie d'une gorge de brasage (9) ayant un volume récepteur de brasage dans la zone immédiate, il est vaporisé une couche de protection d'activité en or d'environ 30 nanomètres d'épaisseur ;
- pour le brasage, on utilise des pièces de brasage (10) avec une quantité en excès ;
- dans la phase vapeur d'un liquide inerte, il est effectué, pour des températures d'environ 213°C, le brasage du premier côté (11) du récipient (1) et, pour des températures d'environ 170°C, le brasage du second côté (12) du récipient (1).
